# EUROPÄISCHE PATENTSCHRIFT

(11) **EP 1 265 021 B1**
(45) Veröffentlichungstag und Bekanntmachung des Hinweises auf die Patenterteilung: **14.02.2007**
(21) Anmeldenummer: 02011762.8
(22) Anmeldetag: 27.05.2002
(51) Int. Cl.: F16L 57/00, B65D 59/06

(54) **Schutzkappe**
Protective cap
Capuchon de protection

(30) Priorität: 07.06.2001 DE 20109475 U
(43) Veröffentlichungstag der Anmeldung: 11.12.2002
(73) Patentinhaber: VERITAS AG, 63571 Gelnhausen (DE)
(72) Erfinder: Emmrich, Michael, 63589 Linsengericht (DE); Reinig, Michael, 63636 Brachtal (DE)
(74) Vertreter: Grünecker, Kinkeldey, Stockmair & Schwanhäusser Anwaltssozietät

(56) Entgegenhaltungen:
- EP-A- 0 750 150
- DE-A- 2 439 831
- DE-U- 8 414 522
- GB-A- 757 918
- US-A- 3 186 573
- US-A- 3 318 488
- US-A- 5 085 332
- US-A- 6 105 817

## Beschreibung

Die Erfindung betrifft eine Schutzkappe zum Aufstecken auf einem Anschlussstutzen im Bereich eines Endabschnitt eines Rohres oder Schlauches, gemäß dem Oberbegriff des ersten Anspruchs.

Eine solche Schutzkappe ist bereits aus der DE 81 14 522 bekannt.

In der Produktion, insbesondere bei der Automobilherstellung, werden vorgefertigte Einzelteile, z.B. Rohre und Schläuche mit Anschlussstutzen, nicht direkt nach der Herstellung sondern erst zu einem späteren Zeitpunkt montiert, so dass es notwendig ist, die gefertigten Einzelteile nicht nur zu dem Montageort zu befördern, sondern gleichzeitig auch dafür zu sorgen, dass die Anschlussstutzen keine Beschädigungen erhalten. Zum Schutz der Anschlussstutzen hat es sich daher durchgesetzt eine Schutzkappe auf diese aufzustecken, die den Anschlussstutzen aufnimmt. Zwar kann auf diese Weise ein Schutz des Anschlussstutzens bereitgestellt werden, die Schutzkappen weisen jedoch das Problem auf, dass sie häufig nur sehr schlecht an dem Anschlussstutzen halten und sich daher sehr leicht von der Anschlusskappe lösen, z.B. während der normalen Beanspruchung im Zuge der Beförderung. Ein weiteres Problem, dass mit der schlechten Haftung der Schutzkappe auf dem Anschlussstutzen zusammenhängt ist, dass der Anschlussstutzen sehr leicht durch die Bewegung der Schutzkappe auf diesem verkratzt. Schutzkappen, die eher fest auf dem Anschlussstutzen bzw. dem Rohr oder Schlauch sitzen, lassen sich wiederum nur schwer montieren und wieder abziehen.

Der Erfindung liegt daher die Aufgabe zugrunde, eine Schutzkappe der eingangs genannten Art zu schaffen, welche einerseits einen guten Halt der Schutzkappe auf dem Anschlussstutzen gewährleistet und andererseits einfach zu montieren und vom Anschlussstutzen entfernbar ist.

Diese Aufgabe wird erfindungsgemäß durch eine Schutzkappe gemäß Anspruch 1.

Die Bereitstellung einer elastischen Führungszunge, die im aufgesteckten Zustand in das Lumen des Anschlussstutzens eingreift in Verbindung mit einem Halteabschnitt an der Schutzkappenseitenwand, stellt einen wesentlich verbesserten Halt der Schutzkappe auf dem Endabschnitt des Rohres oder Schlauches sicher, da die Schutzkappe nicht nur außen an dem Anschlussstutzen anliegt sondern gleichermaßen im Inneren eine Haltefunktion bereitstellt. Gleichzeitig lässt sich die Schutzkappe leicht montieren und wieder abziehen.

Nach einer bevorzugten Ausführungsform ist vorgesehen, dass die elastische Führungszunge an dem Haubenabschnitt angebracht sind. Auf diese kann sichergestellt werden, dass die elastischen Führungszungen in das Lumen des Anschlussstutzens eingreifen.

Eine andere Ausführungsform der vorliegenden Erfindung kann vorsehen, dass die elastische Führungszunge bei aufgesteckter Schutzkappe mit der Innenwand des Endabschnitts des Anschlussstutzens oder des Rohres oder Schlauches elastisch im Eingriff steht. Auch diese Ausführungsform verbessert den Sitz der Schutzkappe auf dem Anschlussstutzen und verhindert eine übermäßige Bewegung der Schutzkappe auf diesem.

Nach einer vorteilhaften Ausgestaltung der Erfindung kann vorgesehen sein, dass mindestens zwei einander gegenüberliegende Führungszungen vorgesehen sind. Die Ausbildung zweier Führungszungen verteilt die Anlageflächen auf zwei Bereiche im Lumen des Anschlussstutzen und kann auf diese Weise wiederum zum besseren Halt der Kappe beitragen.

Hierbei kann sich besonders bewähren, wenn vier Führungszungen vorgesehen sind, die durch Aussparungen voneinander beabstandet sind. Mit vier Führungszungen wird der Halt der Kappe nochmals verbessert, gleichzeitig stellt die Ausbildung der Aussparungen sicher, dass die Führungszungen auch im Verhältnis zueinander ausreichend elastisch verformt werden können.

Es kann ferner vorgesehen sein, dass sich die Führungszunge im wesentlichen parallel zu einer Schutzkappenseitenwand erstreckt. Da die Innenhülse des Anschlussstutzens meist parallel zu der Außenhülse desselben angeordnet ist, kann sich diese Ausbildung als vorteilhaft erweisen.

Gemäß noch einer anderen Ausführungsform kann es sich als vorteilhaft erweisen, wenn die Führungszungen im Querschnitt abschnittsweise kreisbogenförmig ausgebildet sind. Auf diese Weise können sich die Führungszungen besonders vorteilhaft an den Innenbereich des Anschlussstutzens anlegen.

Hierbei kann vorgesehen sein, dass sich der Haubenabschnitt zumindest um eine vorbestimmte Länge, vorzugsweise etwa 2/3 der Schutzkappenseitenwand in Längsrichtung der Schutzkappe erstreckt. Diese Gestaltung kann zur der Stabilität der Schutzkappe auf dem Anschlussstutzen beitragen. Die angegebene Länge der Führungszunge stellt eine ausreichende Festigkeit bei gleichzeitiger bestehender Elastizität sicher.

Nach einer anderen Ausführungsform der Erfindung kann eine Abschlusskante der Führungszunge zu der Schutzkappenseitenwand hin abgeschrägt sein. Hierbei kann vorgesehen sein, dass die obere Abschlusskante der Führungszunge unter einem Winkel von 60° abgeschrägt ist. Diese Merkmale tragen zu einem besseren Einführverhalten der elastischen Führungszungen in das Lumen des Rohres und damit einem besseren Aufsteckverhalten der Schutzkappe bei. Durch die abgeschrägte Ausbildung der Abschlusskante kann diese einfacher an der Innenwand des Anschlussstutzens entlanggleiten, da keine scharfe Kante einen möglichen Widerstand bietet.

Gemäß einer weiteren Ausführungsform kann es sich als vorteilhaft erweisen, wenn vier Halteabschnitte in der Schutzkappenseitenwand vorgesehen sind. Die vier Halteabschnitte können sich über den gesamten Außenumfang der Schutzkappe verteilen und somit eine gleichmäßig verteilte und dadurch besonders wirkungsvolle Haltefunktion bieten.

Der Halteabschnitt wird ist als Zunge in der Schutzkappenseitenwand ausgebildet. Dieses Merkmal trägt dazu bei, dass die Schutzkappe möglichst einfach bei verbesserter Wirkung ausgebildet werden kann. Gleichermaßen stellt die Ausbildung als Zunge eine gewisse Elastizität und Verformbarkeit der Halteabschnitte sicher, die insbesondere von Vorteil ist wenn die Schutzkappe über den Anschlussstutzen geschoben wird.

Als besonders wirkungsvoll kann es sich in diesem Zusammenhang erweisen, wenn der Haltabschnitt an seinem oberen Endabschnitt abgerundet ist. Dadurch kann sich das Abziehen der Schutzkappe erleichtern. Von Vorteil kann es weiterhin sein, wenn die Schutzkappe mit einer Verdickung rampenförmig ausgebildet ist, die sich in Richtung von der Abschlusskante aus radial erweitert. Dadurch kann sich das Aufschieben der Schutzkappe auf dem Anschlussstutzen erleichtern.

Ferner kann gemäß einer noch anderen Ausführungsform vorgesehen sein, dass die Aussparungen zwischen den Führungszungen jeweils mit den Halteabschnitten in den Schutzkappenseitenwänden fluchten. Die Halteabschnitte können dann immer an den Stellen auf die Außenhülse des Anschlussstutzens wirken, an denen die Aussparungen an der Innenhülse vorgesehen sind. Auf diese Weise wird eine abwechselnde Stütz-und Haltefunktion im Außen- und Innenbereich gewährleistet.

Es hat sich hierbei als geeignet erwiesen, wenn die Schutzkappe topfförmig mit einem Deckelbereich und der sich an diesen anschließenden Schutzkappenseitenwand ausgebildet ist. Diese Form eignet sich für zylindrische Anschlussstutzen.

In einer weiteren bevorzugten Ausführungsform der Erfindung kann vorgesehen sein, dass an der Außenseite der Schutzkappenseitenwand ein angerauter Bereich ausgebildet ist. Hierbei kann es sich gleichermaßen als vorteilhaft erweisen, wenn die Au-ßenseite der Schutzkappenseitenwand mit Griffabschnitten versehen ist. Beide vorgenannten Ausführungsformen dienen in Kombination oder jeweils für sich der besseren Handhabbarkeit der Schutzkappe beim Aufstecken derselben, da die Griffigkeit des Materials wesentlich erhöht wird. Die Griffabschnitte können sich hierbei ringförmig um die Schutzkappenseitenwand erstrecken.

Bezüglich der Griffabschnitt kann vorgesehen sein, dass diese stufenförmig ausgebildet sind, um so einen besonders gute Griffigkeit bereitzustellen.

Des weitern kann es sich als vorteilhaft herausstellen, wenn die Schutzkappe aus PP hergestellt ist. Dieses Material eignet sich besonders gut hinsichtlich der notwendigen Haltbarkeit und Verarbeitbarkeit. Gleichzeitig stellt es eine ausreichende elastische Verformbarkeit zu Verfügung.

Ferner wird ein Anschlussstutzen mit einem Rohr oder einem Schlauch, mit einer Innen- und einer erfindungsgemäßen Außenhülse zwischen denen das Rohr oder der Schlauch aufgenommen ist und mit einer Schutzkappe, welche den Anschlussstutzen im aufgesteckten Zustand zumindest abschnittweise abdeckt, zur Verfügung gestellt.

Ferner hat es sich als vorteilhaft herausgestellt, wenn an dem dem Rohr oder Schlauch zugewandten Ende der Außenhülse eine vorspringende Kante ausgebildet ist. Diese vorspringende Kante stellt ein Element dar, dass im aufgesteckten Zustand auf einfache weise mit den Halteelementen der Schutzkappe im Eingriff stehen kann.

Zum besseren Sitz im Lumen des Anschlussstutzens kann die Innenhülse eine vorspringende Kante aufweisen.

Im folgenden werden bevorzugte Ausführungsformen der Erfindung anhand einer Zeichnung näher beschrieben. Es zeigt:
- Fig. 1: eine isometrische Darstellung einer erfindungsgemäßen Schutzkappe,
- Fig. 2: die in Figur 1 dargestellte Schutzkappe im Querschnitt,
- Fig. 3: eine Vergrößerung des in Fig. 2 mit X gekennzeichneten Bereichs, welcher einen Halteabschnitt an der Schutzkappenseitenwand im Querschnitt zeigt,
- Fig. 4: eine Seitenansicht einer Schutzkappe,
- Fig. 5: eine Draufsicht auf eine Schutzkappe und
- Fig. 6: einen Anschlussstutzen im Querschnitt.

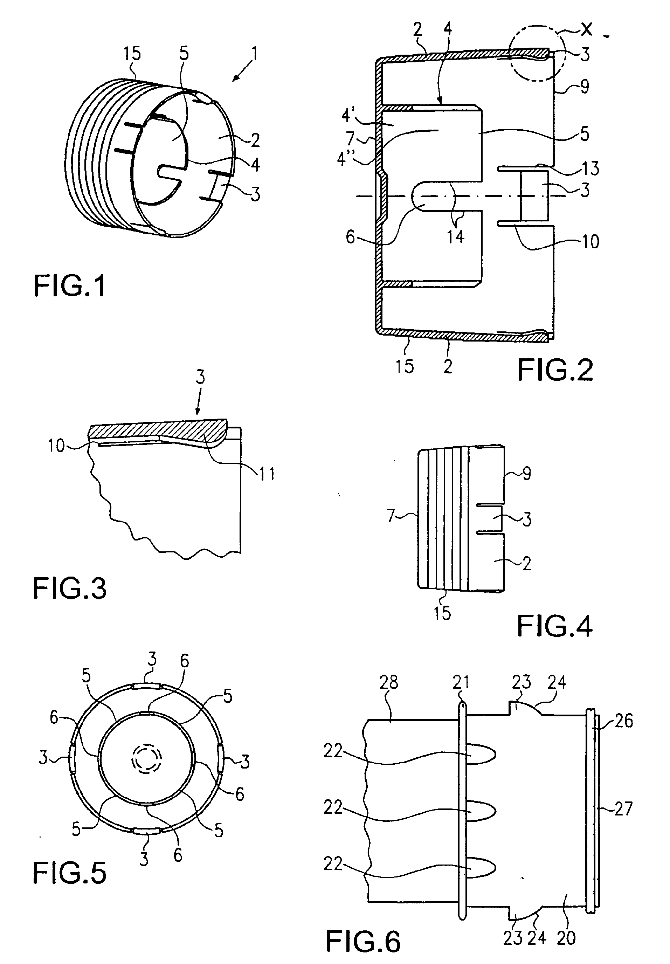

Die in Figur 1 dargestellte Schutzkappe 1 ist topfförmig ausgebildet, mit einem in der vorliegenden Darstellung nicht sichtbaren Deckelbereich und einer sich an diesen kreisförmig im wesentlichen senkrecht anschließenden Schutzkappenseitenwand 2. In dieser Schutzkappenseitenwand sind in dem äußeren Endbereich, d.h. in dem dem Deckelbereich gegenüberliegenden Ende der Schutzkappenseitenwand 2 Halteabschnitte 3 ausgebildet. Hierbei sind in der gezeigten Darstellung insgesamt vier Halteabschnitte 3 ausgebildet, die jeweils gleichmäßig voneinander beabstandet sind, und wobei sich jeweils zwei Halteabschnitte 3 unmittelbar gegenüberliegen. Die Schutzkappenseitenwand bildet zusammen mit dem Deckelabschnitt einen Haubenabschnitt.

Im Inneren der Schutzkappe 1 ist ein Abschnitt 4 ausgebildet, welcher sich eine vorbestimmte Länge in Längsrichtung der Schutzkappe 1 erstreckt. Der Abschnitt 4 weist hierbei elastische Zungen 5 auf, die durch Aussparungen 6 voneinander beabstandet sind.

Wie im Detail in Figur 2 dargestellt, die eine Schutzkappe 1 im Querschnitt zeigt, schließt sich der Abschnitt 4 direkt an den Deckelbereich 7 der Schutzkappe 1 an, und ist kreisförmig auf diesem, sich in Längsrichtung der Schutzkappe erstreckend ausgebildet. Hierbei wird aus Figur 2 deutlich, dass sich der Abschnitt 4 in zwei Bereiche aufteilen lässt, einen Bereich 4', in welchem die elastischen Führungszungen 5 ausgebildet sind, sowie einen zwischen dem Bereich 4' und dem Deckelbereich 7 der Schutzkappe 1 ausgebildeten Abschnittsbereich 4". Dieser Bereich 4" erstreckt sich kreisförmig ohne jede Aussparungen direkt von der Innenseite des Deckelelementes 7 aus. Die Bereitstellung des Abschnitts 4" stellt insbesondere die Festigkeit des unteren Abschnitts der elastischen Führungszungen sicher. Hierbei ist das Längenverhältnis des Bereiches 4" und des Bereiches 4' zueinander ungefähr 1 zu 2, wobei die elastischen Zungen 5 vorzugsweise noch etwas länger ausgebildet sein können.

Die elastischen Führungszungen 5, sind wie bereits erwähnt, durch Aussparungen 6 voneinander beabstandet. Diese Aussparungen 6 sind in ihrem Endbereich, d.h. in ihrem dem Deckelelement 7 zugewandten Bereich abgerundet ausgebildet.

Wie auch aus Figur 5 deutlich wird, ist der Abschnitt 4 in der Draufsicht kreisförmig ausgebildet, und die einzelnen elastischen Führungszungen 4 sind im Querschnitt abschnittsweise kreisförmig ausgebildet. Der Abschnitt 4 hat also die dem Lumen des Anschlussstutzens im wesentlichen entsprechende Form. Insgesamt sind vier Führungszungen vorgesehen, die jeweils gleich groß ausgebildet sind.

Zurückkommend auf Figur 2 wird deutlich, dass die obere Abschlusskante 8 der elastischen Führungszungen 5 zu der Innenwand der Schutzkappenseitenwand 2 hin abgeschrägt ist, d.h. die innere Seitenwand der elastischen Führungszunge ist länger ausgebildet als die Außenwand. Vorzugsweise beträgt der Neigungswinkel zwischen der abgeschrägten Fläche der Abschlusskante und der Außenwand der elastischen Führungszunge 5 30°. Die Abschrägung der Außenkante 8 verbessert das Einführen der elastischen Führungszungen in das Innere des Anschlussstutzens und stellt dadurch einen besseren Halt derselben in dem Anschlussstutzen sicher.

Die Seitenwände des Abschnittes 4 bzw. der elastischen Führungszungen 5 erstrecken sich senkrecht von dem Deckelbereich 7 und verlaufen in etwa parallel zu der Schutzkappenseitenwänden 2. Jedoch hat es sich bewährt, wenn die Schutzkappenseitenwand 2 vorzugsweise leicht konisch ausgebildet ist, d.h. ihr Durchmesser direkt an dem Deckelelement 7 kleiner als an der Aussenkante 9 ist. Ferner wird deutlich, dass sich der Abschnitt 4, d.h. sowohl der Bereich 4' als auch der Bereich 4", nur eine vorbestimmte Länge in Längsrichtung der Schutzkappe erstreckt, die Schutzkappenseitenwand 2 jedoch deutlich über den Abschnitt 4 hinausragt. Das Verhältnis der Länge bzw. der Höhe des Abschnittes 4 zu der Schutzkappenseitenwand 2 beträgt hier ungefähr 2 zu 1.

In dem sich über den Abschnitt 4 hinauserstreckenden Bereich der Schutzkappenseitenwand sind die bereits erwähnten Halteabschnitte 2 ausgebildet. Diese Halteabschnitte sind vorzugsweise als Zungenelemente ausgebildet, die jeweils durch zwei schmale Aussparungen 10 von der Schutzkappenseitenwand 2 abgetrennt sind.

Die genaue Form der Halteabschnitte 3 ist in Figur 3 verdeutlicht, hierbei handelt es sich um einen Querschnitt des Halteabschnittes. Wie in Figur 3 darstellt, überragt die Schutzkappenseitenwand den Halteabschnitt 3 in ihrer Länge um ein vorbestimmtes Maß. Der Halteabschnitt 3 selbst ist an seinem freien Ende, d.h. der Abschlusskante 9 der Schutzkappenseitenwand 2 zugewandten Ende mit einer radial in das Innere der Schutzkappe gerichteten Verdickung 11 ausgebildet, die dann rampenförmig entlang der Innenwand des Halteabschnittes ausläuft, bis die normale Dicke der Schutzkappenseitenwand erreicht wird. Vorzugsweise wird hierbei ein stufenloser Übergang ausgebildet. Ferner ist das obere Ende des Halteabschnittes abgerundet ausgebildet, d.h. die stärkste Verdickung wird nicht direkt an der Abschlusskante des Halteabschnittes 3 gemessen.

Durch die rampenförmige Verringerung der Verdickung, wird eine Rastkante 12 gebildet, welche beim Aufstecken als Rastkante eingesetzt wird.

Aus Figur 2 wird ferner deutlich, dass jeweils die Aussparungen 6 zwischen den elastischen Führungszungen 5 und die Halteabschnitte 3 solchermaßen zueinander ausgerichtet sind, dass eine angenommene Mittellinie, welche die Aussparung in der Mitte der Länge nach teilt, mit einer angenommenen entsprechenden Mittellinie in dem Halteabschnitt 3 fluchtet. Es liegen sich folgendermaßen, wie auch aus Figur 5 deutlich, jeweils zwei Aussparungen 6 und zwei Halteabschnitte 3 gegenüber.

An der Außenseite der Schutzkappenseitenwand 2 sind ferner Griffelemente 15 ausgebildet, die vorzugsweise in Form von einzelnen sich in Richtung der Abschlusskante 9 der Schutzkappenseiten 2 erstreckenden Stufenelemente ausgebildet sind.

Diese Stufenelemente 15, verlaufen wie in Figur 4 im Detail dargestellt, rings um einen sich an das Deckelelement 7 anschließenden Bereich der Schutzkappenseitenwand 2.

In Figur 6 ist ein Anschlussstutzen in einer Seitenansicht dargestellt. Es wir folglich die Außenhülse gezeigt. Die Außenhülse umfasst hierbei einen Hülsenbereich 20 der an seinem dem Schlauch zugewandten Ende eine vorspringende Kante 21 aufweist, die sich deutlich über den Außenumfang des Hülsenbereiches 20 hinauserstreckt. Der Hülsenbereich 20 weist ferner an seinem der vorspringenden Kante 21 zugewandten Endabschnitt Vorsprünge 22 auf, die direkt an der vorspringenden Kante 21 enden.

Ungefähr in der Mitte des Hülsenbereiches 20 sind ferner zwei einander gegenüberliegende Rastabschnitte 23 ausgebildet, deren Rampenabschnitt 24 zu der vorspringenden Kante 21 geneigt ist, und deren Rastabschnitt in etwa parallel zu den Kantenabschnitt 21 verläuft. Im Bereich der freien Enden des Hülsenabschnittes 20 ist eine Nut ausgebildet, welche einen Dichtungsring 26 aufnimmt.

Wird in der Praxis die Schutzkappe auf den Anschlussstutzen aufgesetzt, wird der Abschnitt 4 und damit die elastischen Führungszungen 5 in die Innenhülse des Anschlussstutzen eingeführt, während die Außenhülse von der Innenseite der Schutzkappenseitenwand 2 aufgenommen wird. Hierbei verformen sich während des Aufsteckvorganges die elastischen Führungszungen durch die Berührung mit der Innenhülse des Anschlussstutzens, da der Durchmesser eines Bereiches der Innenhülse kleiner ist als der Ausgangsdurchmesser der elastischen Führungszungen. Diese werden nach Innen, d.h. in das Innere der Schutzkappe hinein verformt.

Gleichzeitig werden bei dem Aufsteckvorgang die Halteabschnitte 3 über die vorspringende Kante 21 der Außenhülse des Anschlussstutzen geführt und hierbei werden die Halteabschnitte 3 zunächst aufgrund der vorhandenen Verdickung 11 zunächst elastisch nach außen verformt und nehmen, sobald die vorspringende Kante 21 über den Rampenbereich des Halteabschnittes 3 geschoben wurde, wieder im Wesentlichen ihre ursprüngliche Position ein. Die vorspringende Kante 21 des Anschlussstutzens befindet sich in ihrer aufgesteckten Endposition direkt in der Rastkante 12 des Halteabschnitts. Die bereitgestellte Verdickung stellt in diesem Zusammenhang einen zusätzlichen Halteschutz für die Schutzkappe dar, da sie die vorspringende Kante 21 des Anschlussstutzens hintergreift..

Die an der Außenseite aufgebrachten Griffelement 5 verbessern das Aufsteckverhalten der Schutzkappe, vorzugsweise kann zu diesen Zweck ein Bereich der Schutzkappe außen angeraut ausgebildet werden.

## Patentansprüche

1. Schutzkappe (1) zum Aufstecken auf einen Anschlussstutzen im Bereich eines Endabschnitts eines Rohres oder Schlauches, mit einem Haubenabschnitt in dem bei aufgesteckter Schutzkappe (1) der Anschlussstutzen aufgenommen ist, wobei am Haubenabschnitt wenigstens eine elastisch verformbare Führungszunge (5) vorgesehen ist, die bei aufgesteckter Schutzkappe (1) wenigstens abschnittsweise in das Lumen des Anschlussstutzens (19) eingreift und mit der Innenwand des Anschlussstutzens und/oder des Rohrs und/oder des Schlauchs in elastischen Eingriff bringbar ist,
**dadurch gekennzeichnet, dass**
die Schutzkappe (1) wenigstens einen als Zunge an einer Schutzkappenseitenwand des Haubenabschnitts ausgebildeten Halteabschnitt (3) aufweist und mit dem Halteabschnitt (3) reib- und/oder formschlüssig an dem Anschlussstutzen festlegbar ist.

2. Schutzkappe (1) nach Anspruch 1, **dadurch gekennzeichnet, dass** die elastische Führungszunge (5) an dem Haubenabschnitt angebracht ist.

3. Schutzkappe (1) nach Anspruch 1 oder 2, **dadurch gekennzeichnet, dass** mindestens zwei einander gegenüberliegende Führungszungen (5) in dem Haubenabschnitt ausgebildet sind.

4. Schutzkappe (1) nach wenigstens einem der Ansprüche 1 bis 3, **dadurch gekennzeichnet, dass** vier Führungszungen (5) vorgesehen sind, die durch Aussparungen (6) voneinander beabstandet sind.

5. Schutzkappe (1) nach wenigstens einem der Ansprüche 1 bis 4, **dadurch gekennzeichnet, dass** die Führungszungen (5) im Querschnitt abschnittsweise kreisbogenförmig ausgebildet sind.

6. Schutzkappe nach wenigstens einem der Ansprüche 1 bis 5, **dadurch gekennzeichnet, dass** sich die Führungszungen im Wesentlichen parallel zur Schutzkappenseitenwand erstrecken.

7. Schutzkappe (1) nach wenigstens einem der Ansprüche 1 bis 6, **dadurch gekennzeichnet, dass** ein mit den Führungszungen (5) versehene Abschnitt (4) sich zumindest um eine vorbestimmte Länge, vorzugsweise in etwa 2/3 der Schutzkappenseitenwand (2) ins Längsrichtung der Schutzkappe (1) erstreckt.

8. Schutzkappe (1) nach wenigstens einem der Ansprüche 1 bis 7, **dadurch gekennzeichnet, dass** eine Abschlusskante (8) der Führungszunge (5) zu der Schutzkappenseitenwand (2) hin abgeschrägt ist.

9. Schutzkappe (1) nach Anspruch 8, **dadurch gekennzeichnet, dass** die Abschlusskante (8) der Führungszunge (5) unter einem Winkel von 60° abgeschrägt ist.

10. Schutzkappe (1) nach wenigstens einem der Ansprüche 1 bis 9, **dadurch gekennzeichnet, dass** vier Halteabschnitte (3) in der Schutzkappenseitenwand (2) vorgesehen sind.

11. Schutzkappe (1) nach wenigstens einem der Ansprüche 1 bis 10, **dadurch gekennzeichnet, dass** der Haltabschnitt (3) an seinem oberen Endabschnitt abgerundet und mit einer nach innen gerichteten Verdickung (11) ausgebildet ist.

12. Schutzkappe (1) nach wenigstens einem der Ansprüche 1 bis 11, **dadurch gekennzeichnet, dass** die Verdickung rampenförmig ausgebildet ist und sich in Richtung von der Anschlusskante aus radial erweitert.

13. Schutzkappe (1) nach wenigstens einem der Ansprüche 1 bis 12, **dadurch gekennzeichnet, dass** die Aussparungen (6) zwischen den Führungszungen (5) jeweils mit den Halteabschnitten (3) in den Schutzkappenseitenwänden (2) fluchten.

14. Schutzkappe (1) nach wenigstens einem der Ansprüche 1 bis 14, **dadurch gekennzeichnet, dass** der Haubenabschnitt der Schutzkappe (1) topfförmig mit einem Deckelbereich (9) und der sich an diesen anschließenden Schutzkappenseitenwand (2) ausgebildet ist.

15. Schutzkappe (1) nach wenigstens einem der Ansprüche 1 bis 14, **dadurch gekennzeichnet, dass** an der Außenseite der Schutzkappenseitenwand (2) wenigstens ein angerauter Bereich ausgebildet ist.

16. Schutzkappe (1) nach einen der Ansprüche 1 bis 15, **dadurch gekennzeichnet, dass** die Außenseite der Schutzkappenseitenwand (2) mit Griffabschnitten (15) versehen ist.

17. Schutzkappe (1) nach Anspruch 16, **dadurch gekennzeichnet, dass** die Griffabschnitte (15) stufenförmig ausgebildet sind.

18. Schutzkappe (1) nach einem der vorangegangenen Ansprüche 1 bis 17, **dadurch gekennzeichnet, dass** die Griffabschnitte (15) ringförmig um die Schutzkappe umlaufen

19. Schutzkappe (1) nach einem der Ansprüche 1 bis 18, **dadurch gekennzeichnet, dass** die Schutzkappe (1) aus PP hergestellt ist.

20. Anschlussstutzen (19) mit einem Rohr oder einem Schlauch, mit einer Innen- und einer Außenhülse zwischen denen das Rohr oder der Schlauch aufgenommen ist und mit einer Schutzkappe (1), welche den Anschlussstutzen im aufgesteckten Zustand zumindest abschnittsweise abdeckt, wobei die Schutzkappe nach einem der Ansprüche 1 bis 19 ausgebildet ist.

21. Anschlussstutzen (19) nach Anspruch 20, **dadurch gekennzeichnet, dass** an dem dem Rohr oder Schlauch zugewandten Ende der Außenhülse eine vorspringende Kante (21) ausgebildet ist, die sich bei aufgeschobener Schutzkappe mit dem Halteabschnitt in Eingriff befindet.

22. Anschlussstutzen (19) nach Anspruch 20 oder 21, **dadurch gekennzeichnet, dass** die Innenhülse eine vorspringende Kante aufweist.

## Claims

1. Protective cap (1) for positioning onto a connecting piece in the region of an end portion of a pipe or hose, with a capping portion in which the connecting piece is received when the protective cap (1) is positioned, at least one resiliently deformable guide tongue (5) being provided on the capping portion which, when the protective cap (1) is positioned, engages at least partially in the lumen of the connecting piece (19) and may be brought into resilient engagement with the inner wall of the connecting piece and/or the pipe and/or the hose, **characterised in that** the protective cap (1) comprises at least one retaining portion (3) configured as a tongue on a protective cap side wall of the capping portion and may be secured by the retaining portion (3) to the connecting piece with a non-positive and/or positive fit.

2. Protective cap (1) according to Claim 1, **characterised in that** the resilient guide tongue (5) is attached to the capping portion.

3. Protective cap (1) according to Claim 1 or 2, **characterised in that** at least two guide tongues (5) opposing one another are configured in the capping portion.

4. Protective cap (1) according to at least one of Claims 1 to 3, **characterised in that** four guide tongues (5) are provided which are spaced apart from one another by recesses (6).

5. Protective cap (1) according to at least one of Claims 1 to 4, **characterised in that** the guide tongues (5) are of partially circular arc configuration in cross-section.

6. Protective cap according to at least one of Claims 1 to 5, **characterised in that** the guide tongues extend substantially parallel to the protective cap side wall.

7. Protective cap (1) according to at least one of Claims 1 to 6, **characterised in that** a portion (4) provided with the guide tongues (5) extends at least by a predetermined length, preferably approximately 2/3 of the protective cap side wall (2) in the longitudinal direction of the protective cap (1).

8. Protective cap (1) according to at least one of Claims 1 to 7, **characterised in that** a terminal edge (8) of the guide tongue (5) is bevelled towards the protective cap side wall (2).

9. Protective cap (1) according to Claim 8, **characterised in that** the terminal edge (8) of the guide tongue (5) is bevelled at an angle of 60°.

10. Protective cap (1) according to at least one of Claims 1 to 9, **characterised in that** four retaining portions (3) are provided in the protective cap side wall (2).

11. Protective cap (1) according to at least one of Claims 1 to 10, **characterised in that** the retaining portion (3) is rounded at its upper end portion and is configured with an inwardly oriented thickened portion (11).

12. Protective cap (1) according to at least one of Claims 1 to 11, **characterised in that** the thickened portion is of ramp-shaped configuration and widens radially outwardly in the direction of the connection edge.

13. Protective cap (1) according to at least one of Claims 1 to 12, **characterised in that** the recesses (6) between the guide tongues (5) are respectively aligned with the retaining portions (3) in the protective cap side walls (2).

14. Protective cap (1) according to at least one of Claims 1 to 14, **characterised in that** the capping portion of the protective cap (1) is of cup-shaped configuration with a cover region (9) and the protective cap side wall (2) attached thereto.

15. Protective cap (1) according to at least one of Claims 1 to 14, **characterised in that** at least one roughened region is configured on the outer face of the protective cap side wall (2).

16. Protective cap (1) according to one of Claims 1 to 15, **characterised in that** the outer face of the protective cap side wall (2) is provided with grip portions (15).

17. Protective cap (1) according to Claim 16, **characterised in that** the grip portions (15) are of step-shaped configuration.

18. Protective cap (1) according to one of the preceding Claims 1 to 17, **characterised in that** the grip portions (15) surround the protective cap in an annular manner.

19. Protective cap (1) according to one of Claims 1 to 18, **characterised in that** the protective cap (1) is manufactured from polypropylene.

20. Connecting piece (19) with a pipe or a hose with an inner and outer sleeve between which the pipe or the hose is received and with a protective cap (1) which at least partially covers the connecting piece in the positioned state, the protective cap being configured according to one of Claims 1 to 19.

21. Connecting piece (19) according to Claim 20, **characterised in that** at the end of the outer sleeve facing the pipe or hose, a projecting edge (21) is configured which, when the protective cap is pushed on, is engaged with the retaining portion.

22. Connecting piece (19) according to Claim 20 or 21, **characterised in that** the inner sleeve has a projecting edge.

## Revendications

1. Capuchon de protection (1) à poser sur un raccord, dans la zone d'une section d'extrémité d'un tube ou d'un tuyau, comportant une partie en forme de coiffe dans laquelle le raccord est logé, une fois que le capuchon de protection (1) est posé, étant précisé qu'il est prévu sur la partie en forme de coiffe au moins une languette de guidage déformable élastique (5) qui, quand le capuchon (1) est posé, pénètre au moins en partie dans l'ouverture du raccord (19) et est apte à venir en contact élastiquement avec la paroi intérieure du raccord et/ou du tube et/ou du tuyau,
**caractérisé en ce que** le capuchon de protection (1) comporte au moins une partie de fixation (3) qui est conçue comme une languette sur une paroi latérale de la partie en forme de coiffe du capuchon, et est apte à être bloqué sur le raccord grâce à cette partie de fixation (3), par frottement et/ou par complémentarité de forme.

2. Capuchon de protection (1) selon la revendication 1, **caractérisé en ce que** la languette de guidage élastique (5) est prévue sur la partie en forme de coiffe.

3. Capuchon de protection (1) selon la revendication 1 ou 2, **caractérisé en ce qu'**au moins deux languettes de guidage opposées (5) sont formées dans la partie en forme de coiffe.

4. Capuchon de protection (1) selon l'une au moins des revendications 1 à 3, **caractérisé en ce qu'**il est prévu quatre languettes de guidage (5), qui sont espacées les unes des autres par des creux (6).

5. Capuchon de protection (1) selon l'une au moins des revendications 1 à 4, **caractérisé en ce que** les languettes de guidage (5), en coupe transversale, ont une forme partiellement en arc de cercle.

6. Capuchon de protection selon l'une au moins des revendications 1 à 5, **caractérisé en ce que** les languettes de guidage s'étendent globalement parallèlement à la paroi latérale du capuchon.

7. Capuchon de protection (1) selon l'une au moins des revendications 1 à 6, **caractérisé en ce qu'**une partie (4) pourvue des languettes de guidage (5) s'étend au moins sur une longueur prédéfinie, représentant de préférence environ 2/3 de la paroi latérale (2) du capuchon (1), dans le sens longitudinal de celui-ci.

8. Capuchon de protection (1) selon l'une au moins des revendications 1 à 7, **caractérisé en ce qu'**un bord terminal (8) de la languette de guidage (5) est biseauté en direction de la paroi latérale de capuchon (2).

9. Capuchon de protection (1) selon la revendication 8, **caractérisé en ce que** le bord terminal (8) de la languette de guidage (5) est biseauté suivant un angle de 60°.

10. Capuchon de protection (1) selon l'une au moins des revendications 1 à 9, **caractérisé en ce qu'**il est prévu quatre parties de fixation (3) dans la paroi latérale de capuchon (2).

11. Capuchon de protection (1) selon l'une au moins des revendications 1 à 10, **caractérisé en ce que** la partie de fixation (3) est arrondie sur sa partie d'extrémité supérieure et est pourvue d'un épaississement (11) dirigé vers l'intérieur.

12. Capuchon de protection (1) selon l'une au moins des revendications 1 à 11, **caractérisé en ce que** l'épaississement a une forme de rampe et va en s'élargissant radialement à partir du bord terminal.

13. Capuchon de protection (1) selon l'une au moins des revendications 1 à 12, **caractérisé en ce que** les creux (6) prévus entre les languettes de guidage (5) sont dans l'alignement des parties de fixation (3) prévues dans les parois latérales de capuchon (2).

14. Capuchon de protection (1) selon l'une au moins des revendications 1 à 14, **caractérisé en ce que** la partie en forme de coiffe du capuchon (1) a la forme d'un godet, avec une zone de couvercle (7) et, faisant suite à celle-ci, la paroi latérale de capuchon (2).

15. Capuchon de protection (1) selon l'une au moins des revendications 1 à 14, **caractérisé en ce qu'**au moins une zone rugueuse est formée sur le côté extérieur de la paroi latérale de capuchon (2).

16. Capuchon de protection (1) selon l'une des revendications 1 à 15, **caractérisé en ce que** le côté extérieur de la paroi latérale de capuchon (2) est pourvu de parties de préhension (15).

17. Capuchon de protection (1) selon la revendication 16, **caractérisé en ce que** les parties de préhension (15) ont la forme de parties étagées.

18. Capuchon de protection (1) selon l'une des revendications 1 à 17 précédentes, **caractérisé en ce que** les parties de préhension (15) sont prévues suivant une forme annulaire autour du capuchon.

19. Capuchon de protection (1) selon l'une des revendications 1 à 18, **caractérisé en ce qu'**il est fabriqué en PP.

20. Raccord (19) avec un tube ou un tuyau, comportant un manchon intérieur et un manchon extérieur entre lesquels est reçu le tube ou le tuyau, et un capuchon de protection (1) qui, une fois posé, couvre au moins partiellement le raccord, le capuchon étant conçu selon l'une des revendications 1 à 19.

21. Raccord (19) selon la revendication 20, **caractérisé en ce qu'**il est prévu sur l'extrémité du manchon extérieur qui est tournée vers le tube ou le tuyau un bord saillant (21) qui, quand le capuchon est posé, est en prise avec la partie de fixation.

22. Raccord (19) selon la revendication 20 ou 21, **caractérisé en ce que** le manchon intérieur comporte un bord saillant.
